# EUROPEAN PATENT SPECIFICATION

(11) **EP 3 603 181 B1**
(45) Date of publication and mention of the grant of the patent: **30.10.2024**
(21) Application number: 17902379.1
(22) Date of filing: 22.03.2017
(51) Int. Cl.: H04W 36/36, H04W 36/00, H04W 36/08

(54) **A CONDITION FOR HANDOVER**
BEDINGUNG FÜR DIE WEITERREICHUNG
CONDITION DE TRANSFERT

(43) Date of publication of application: 05.02.2020
(73) Proprietor: Motorola Mobility LLC, Chicago, IL 60654 (US)
(72) Inventor: WU, Lianhai, Beijing 100028 (CN); YAN, Zhi, Beijing 100123 (CN); ZHU, Chenxi, Fairfax, Virginia 22033 (US); WANG, Haiming, Beijing 100032 (CN)
(74) Representative: Openshaw & Co.
(86) International application number: PCT/CN2017/077656
(87) International publication number: WO 2018/170777

(56) References cited:
- WO-A1-2010/057127
- WO-A1-2014/007697
- WO-A1-2016/119876
- WO-A2-2012/176010
- CN-A- 103 718 604
- CN-A- 103 797 849
- CN-A- 103 945 467
- CN-A- 105 228 200
- CN-A- 105 580 427
- ERICSSON: "Inter-cell Handover in NR", vol. RAN WG2, no. Reno, Nevada, USA; 20161114 - 20161118, 5 November 2016 (2016-11-05), XP051193217, Retrieved from the Internet <URL:http://www.3gpp.org/ftp/tsg_ran/WG2_RL2/TSGR2_96/Docs/> [retrieved on 20161105]
- ERICSSON: "Conditional Handover", vol. RAN WG2, no. Athens, Greece; 20170113 - 20170117, 4 February 2017 (2017-02-04), XP051223258, Retrieved from the Internet <URL:http://www.3gpp.org/ftp/tsg_ran/WG2_RL2/TSGR2_97/Docs/> [retrieved on 20170204]
- LG ELECTRONICS INC: "Condition based handover procedure in NR", vol. RAN WG2, no. Spokane, U.S.A.; 20170117 - 20170119, 7 January 2017 (2017-01-07), XP051204050, Retrieved from the Internet <URL:http://www.3gpp.org/ftp/tsg_ran/WG2_RL2/TSGR2_AHs/2017_01_NR/Docs/> [retrieved on 20170107]

## Description

### FIELD

The subject matter disclosed herein relates generally to wireless communications and more particularly relates to a condition for handover.

### BACKGROUND

The following abbreviations are herewith defined, at least some of which are referred to within the following description: Third Generation Partnership Project ("3GPP"), Positive-Acknowledgment ("ACK"), Binary Phase Shift Keying ("BPSK"), Clear Channel Assessment ("CCA"), Cyclic Prefix ("CP"), Channel State Information ("CSI"), Common Search Space ("CSS"), Discrete Fourier Transform Spread ("DFTS"), Downlink Control Information ("DCI"), Downlink ("DL"), Downlink Pilot Time Slot ("DwPTS"), Enhanced Clear Channel Assessment ("eCCA"), Enhanced Mobile Broadband ("eMBB"), Evolved Node B ("eNB"), European Telecommunications Standards Institute ("ETSI"), Frame Based Equipment ("FBE"), Frequency Division Duplex ("FDD"), Frequency Division Multiple Access ("FDMA"), Guard Period ("GP"), Hybrid Automatic Repeat Request ("HARQ"), Internet-of-Things ("IoT"), Licensed Assisted Access ("LAA"), Load Based Equipment ("LBE"), Listen-Before-Talk ("LBT"), Long Term Evolution ("LTE"), Multiple Access ("MA"), Modulation Coding Scheme ("MCS"), Machine Type Communication ("MTC"), Multiple Input Multiple Output ("MIMO"), Multi User Shared Access ("MUSA"), Narrowband ("NB"), Negative-Acknowledgment ("NACK") or ("NAK"), Next Generation Node B ("gNB"), Non-Orthogonal Multiple Access ("NOMA"), Orthogonal Frequency Division Multiplexing ("OFDM"), Primary Cell ("PCell"), Physical Broadcast Channel ("PBCH"), Physical Downlink Control Channel ("PDCCH"), Physical Downlink Shared Channel ("PDSCH"), Pattern Division Multiple Access ("PDMA"), Physical Hybrid ARQ Indicator Channel ("PHICH"), Physical Random Access Channel ("PRACH"), Physical Resource Block ("PRB"), Physical Uplink Control Channel ("PUCCH"), Physical Uplink Shared Channel ("PUSCH"), Quality of Service ("QoS"), Quadrature Phase Shift Keying ("QPSK"), Radio Resource Control ("RRC"), Random Access Procedure ("RACH"), Random Access Response ("RAR"), Reference Signal ("RS"), Resource Spread Multiple Access ("RSMA"), Round Trip Time ("RTT"), Receive ("RX"), Sparse Code Multiple Access ("SCMA"), Scheduling Request ("SR"), Single Carrier Frequency Division Multiple Access ("SC-FDMA"), Secondary Cell ("SCell"), Shared Channel ("SCH"), Signal-to-Interference-Plus-Noise Ratio ("SINR"), System Information Block ("SIB"), Transport Block ("TB"), Transport Block Size ("TBS"), Time-Division Duplex ("TDD"), Time Division

Multiplex ("TDM"), Transmission Time Interval ("TTI"), Transmit ("TX"), Uplink Control Information ("UCI"), User Entity/Equipment (Mobile Terminal) ("UE"), Uplink ("UL"), Universal Mobile Telecommunications System ("UMTS"), Uplink Pilot Time Slot ("UpPTS"), Ultra-reliability and Low-latency Communications ("URLLC"), and Worldwide Interoperability for Microwave Access ("WiMAX"). As used herein, "HARQ-ACK" may represent collectively the Positive Acknowledge ("ACK") and the Negative Acknowledge ("NAK"). ACK means that a TB is correctly received while NAK means a TB is erroneously received.

In certain wireless communications networks, a high carrier frequency (e.g., >6GHz) may be used, such as millimeter wave. In some networks, conditional handovers may be used. In various networks, to maintain robustness of a handover, a handover command transmitted to a UE may be configured by a serving cell and may involve multiple candidate cells with condition. If more than one candidate cell meets the condition, handover to a wrong cell may occur or a redundancy handover may occur.

In some configurations, a radio link failure ("RLF") may occur shortly after a successful handover from a source cell to a target cell, or a handover failure may occur during a handover procedure. In such configurations, the UE may attempt to re-establish a radio link connection in a cell other than the source cell and the target cell (e.g., wrong cell).

In various configurations, if a UE selects a candidate second cell as a target cell for a system in which both a candidate first cell and the candidate second cell meet a condition, and a quality of the candidate first cell is better than the candidate second cell, after the UE is handed over to the candidate second cell, a handover from the candidate second cell to the candidate first cell may occur shortly (e.g., redundancy handover).

In some configurations, after RRCConnectionReconfiguration including conditional handover is configured by a gNB and transmitted to a UE, the UE may apply this RRC configuration only when a condition is met. Before applying this RRC reconfiguration, the UE may suspend this RRC reconfiguration and evaluate whether the condition is met. As may be appreciated, more power and/or processing time may be used for such an evaluation than with another RRM measurement. This may occur because after the gNB configures the handover command and transmits the command to the UE, the handover condition may not be met for a long time. For example, after the UE moves to the cell edge, then the UE may move back to a center of the cell or may not move beyond the cell.

3GPP Tdoc R2-1700864, from meeting #97 for TSG-RAN WG2, Athens, January 2017, discusses conditional handover. WO2010/057127A1 discloses that the number of handover-related failures that occur in a communication system may be reduced by taking target access point conditions into account when declaring radio link failure and/or by delaying certain handover operations. WO2012/176010A2 discloses an apparatus for minimizing the recovery time of connecting to a network, the apparatus being configured to receive a message including a preparatory handover command indicating one or more candidate target cells for handover and data indicating that the candidate target cells are selectable for handover in response to a future detection of one or more handover conditions. WO2016/119876A1 concerns radio resource management in high speed train environments.

### BRIEF SUMMARY

The present invention provides a method performed by a user equipment according to claim 1 and a corresponding user equipment apparatus according to claim 7. Embodiments of the invention are defined in the dependent claims.

### BRIEF DESCRIPTION OF THE DRAWINGS

A more particular description of the embodiments briefly described above will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:
Figure 1 is a schematic block diagram illustrating one embodiment of a wireless communication system for conditional handovers;
Figure 2 is a schematic block diagram illustrating one embodiment of an apparatus that may be used for conditional handovers;
Figure 3 is a schematic block diagram illustrating one embodiment of an apparatus that may be used for conditional handovers;
Figure 4 illustrates one embodiment of communications for handovers;
Figure 5 illustrates one embodiment of communications for conditional handovers;
Figure 6 is a schematic flow chart diagram illustrating one embodiment of a method for conditional handovers;
Figure 7 is a schematic flow chart diagram illustrating a method for conditional according to the claimed embodiment.
Figure 8 is a schematic flow chart diagram illustrating a further embodiment of a method for conditional handovers.

### DETAILED DESCRIPTION

As will be appreciated by one skilled in the art, aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, embodiments may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In a certain embodiment, the storage devices only employ signals for accessing code.

Certain of the functional units described in this specification may be labeled as modules, in order to more particularly emphasize their implementation independence. For example, a module may be implemented as a hardware circuit comprising custom very-large-scale integration ("VLSI") circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in code and/or software for execution by various types of processors. An identified module of code may, for instance, include one or more physical or logical blocks of executable code which may, for instance, be organized as an object, procedure, or function. Nevertheless, the executables of an identified module need not be physically located together, but may include disparate instructions stored in different locations which, when joined logically together, include the module and achieve the stated purpose for the module.

Indeed, a module of code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different computer readable storage devices. Where a module or portions of a module are implemented in software, the software portions are stored on one or more computer readable storage devices.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random access memory ("RAM"), a read-only memory ("ROM"), an erasable programmable read-only memory ("EPROM" or Flash memory), a portable compact disc read-only memory ("CD-ROM"), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Code for carrying out operations for embodiments may be any number of lines and may be written in any combination of one or more programming languages including an object oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network ("LAN") or a wide area network ("WAN"), or the connection may be made to an external computer (for example, through the Internet using an Internet Service Provider).

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

Aspects of the embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. The code may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams block or blocks.

The code may also be stored in a storage device that can direct a computer, other programmable data processing apparatus, or other devices to function in a particular manner, such that the instructions stored in the storage device produce an article of manufacture including instructions which implement the function/act specified in the schematic flowchart diagrams and/or schematic block diagrams block or blocks.

The code may also be loaded onto a computer, other programmable data processing apparatus, or other devices to cause a series of operational steps to be performed on the computer, other programmable apparatus or other devices to produce a computer implemented process such that the code which execute on the computer or other programmable apparatus provide processes for implementing the functions/acts specified in the flowchart and/or block diagram block or blocks.

The schematic flowchart diagrams and/or schematic block diagrams in the Figures illustrate the architecture, functionality, and operation of possible implementations of apparatuses, systems, methods and program products according to various embodiments. In this regard, each block in the schematic flowchart diagrams and/or schematic block diagrams may represent a module, segment, or portion of code, which includes one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each figure may refer to elements of proceeding figures. Like numbers refer to like elements in all figures, including alternate embodiments of like elements.

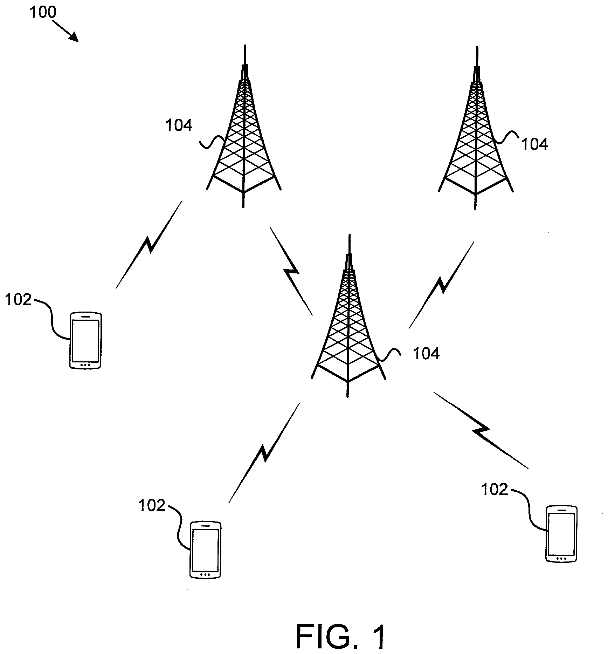

Figure 1 depicts an embodiment of a wireless communication system 100 for conditional handovers. In one embodiment, the wireless communication system 100 includes remote units 102 and base units 104. Even though a specific number of remote units 102 and base units 104 are depicted in Figure 1, one of skill in the art will recognize that any number of remote units 102 and base units 104 may be included in the wireless communication system 100.

In one embodiment, the remote units 102 may include computing devices, such as desktop computers, laptop computers, personal digital assistants ("PDAs"), tablet computers, smart phones, smart televisions (e.g., televisions connected to the Internet), set-top boxes, game consoles, security systems (including security cameras), vehicle on-board computers, network devices (e.g., routers, switches, modems), or the like. In some embodiments, the remote units 102 include wearable devices, such as smart watches, fitness bands, optical head-mounted displays, or the like. Moreover, the remote units 102 may be referred to as subscriber units, mobiles, mobile stations, users, terminals, mobile terminals, fixed terminals, subscriber stations, UE, user terminals, a device, or by other terminology used in the art. The remote units 102 may communicate directly with one or more of the base units 104 via UL communication signals.

The base units 104 may be distributed over a geographic region. In certain embodiments, a base unit 104 may also be referred to as an access point, an access terminal, a base, a base station, a Node-B, an eNB, a gNB, a Home Node-B, a relay node, a device, or by any other terminology used in the art. The base units 104 are generally part of a radio access network that includes one or more controllers communicably coupled to one or more corresponding base units 104. The radio access network is generally communicably coupled to one or more core networks, which may be coupled to other networks, like the Internet and public switched telephone networks, among other networks. These and other elements of radio access and core networks are not illustrated but are well known generally by those having ordinary skill in the art.

In one implementation, the wireless communication system 100 is compliant with the LTE of the 3GPP protocol, wherein the base unit 104 transmits using an OFDM modulation scheme on the DL and the remote units 102 transmit on the UL using a SC-FDMA scheme or an OFDM scheme. More generally, however, the wireless communication system 100 may implement some other open or proprietary communication protocol, for example, WiMAX, among other protocols. The present disclosure is not intended to be limited to the implementation of any particular wireless communication system architecture or protocol.

The base units 104 may serve a number of remote units 102 within a serving area, for example, a cell or a cell sector via a wireless communication link. The base units 104 transmit DL communication signals to serve the remote units 102 in the time, frequency, and/or spatial domain. In one embodiment, a base unit 104 may transmit a handover command to a remote unit 102.

In certain embodiments, a remote unit 102 may receive a handover command involving multiple candidate cells. The remote unit 102 may select a target cell of the multiple candidate cells in response to the target cell meeting a predetermined condition. Accordingly, a remote unit 102 may be used for conditional handovers.

In various embodiments, a remote unit 102 may receive a handover command involving multiple candidate cells. The remote unit 102 may select a target cell of the multiple candidate cells in response to the target cell meeting a predetermined condition relative to other cells of the plurality of candidate cells. Accordingly, a remote unit 102 may be used for conditional handovers.

In some embodiments, a remote unit 102 may receive RRCConnectionReconfiguration including a condition for handover. The remote unit 102 may suspend the RRCConnectionReconfiguration until the condition for handover is met. The remote unit 102 may overwrite the previously suspended RRCConnectionReconfiguration including the condition for handover in response to a predetermined criteria. Accordingly, a remote unit 102 may be used for conditional handovers.

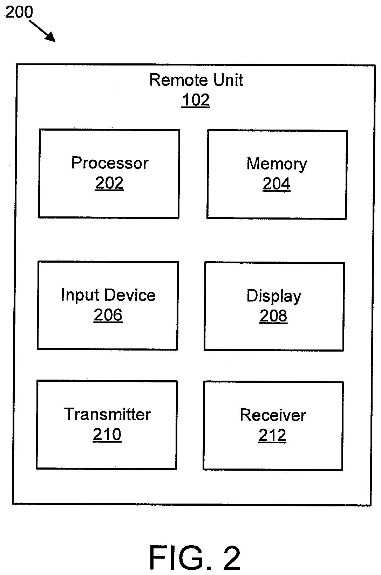

Figure 2 depicts one embodiment of an apparatus 200 that may be used for conditional handovers. The apparatus 200 includes one embodiment of the remote unit 102. Furthermore, the remote unit 102 may include a processor 202, a memory 204, an input device 206, a display 208, a transmitter 210, and a receiver 212. In some embodiments, the input device 206 and the display 208 are combined into a single device, such as a touchscreen. In certain embodiments, the remote unit 102 may not include any input device 206 and/or display 208. In various embodiments, the remote unit 102 may include one or more of the processor 202, the memory 204, the transmitter 210, and the receiver 212, and may not include the input device 206 and/or the display 208.

The processor 202, in one embodiment, may include any known controller capable of executing computer-readable instructions and/or capable of performing logical operations. For example, the processor 202 may be a microcontroller, a microprocessor, a central processing unit ("CPU"), a graphics processing unit ("GPU"), an auxiliary processing unit, a field programmable gate array ("FPGA"), or similar programmable controller. In some embodiments, the processor 202 executes instructions stored in the memory 204 to perform the methods and routines described herein. In various embodiments, the processor 202 selects a target cell of multiple candidate cells in response to the target cell meeting a predetermined condition. In certain embodiments, the processor 202 selects a target cell of multiple candidate cells in response to the target cell meeting a predetermined condition relative to other cells of the multiple candidate cells. In some embodiments, the processor 202 suspends an RRCConnectionReconfiguration until a condition for handover is met and overwrites the previously suspended RRCConnectionReconfiguration including a condition for handover in response to a predetermined criteria. The processor 202 is communicatively coupled to the memory 204, the input device 206, the display 208, the transmitter 210, and the receiver 212.

The memory 204, in one embodiment, is a computer readable storage medium. In some embodiments, the memory 204 includes volatile computer storage media. For example, the memory 204 may include a RAM, including dynamic RAM ("DRAM"), synchronous dynamic RAM ("SDRAM"), and/or static RAM ("SRAM"). In some embodiments, the memory 204 includes non-volatile computer storage media. For example, the memory 204 may include a hard disk drive, a flash memory, or any other suitable non-volatile computer storage device. In some embodiments, the memory 204 includes both volatile and non-volatile computer storage media. In some embodiments, the memory 204 stores data relating to handovers. In some embodiments, the memory 204 also stores program code and related data, such as an operating system or other controller algorithms operating on the remote unit 102.

The input device 206, in one embodiment, may include any known computer input device including a touch panel, a button, a keyboard, a stylus, a microphone, or the like. In some embodiments, the input device 206 may be integrated with the display 208, for example, as a touchscreen or similar touch-sensitive display. In some embodiments, the input device 206 includes a touchscreen such that text may be input using a virtual keyboard displayed on the touchscreen and/or by handwriting on the touchscreen. In some embodiments, the input device 206 includes two or more different devices, such as a keyboard and a touch panel.

The display 208, in one embodiment, may include any known electronically controllable display or display device. The display 208 may be designed to output visual, audible, and/or haptic signals. In some embodiments, the display 208 includes an electronic display capable of outputting visual data to a user. For example, the display 208 may include, but is not limited to, an LCD display, an LED display, an OLED display, a projector, or similar display device capable of outputting images, text, or the like to a user. As another, non-limiting, example, the display 208 may include a wearable display such as a smart watch, smart glasses, a heads-up display, or the like. Further, the display 208 may be a component of a smart phone, a personal digital assistant, a television, a table computer, a notebook (laptop) computer, a personal computer, a vehicle dashboard, or the like.

In certain embodiments, the display 208 includes one or more speakers for producing sound. For example, the display 208 may produce an audible alert or notification (e.g., a beep or chime). In some embodiments, the display 208 includes one or more haptic devices for producing vibrations, motion, or other haptic feedback. In some embodiments, all or portions of the display 208 may be integrated with the input device 206. For example, the input device 206 and display 208 may form a touchscreen or similar touch-sensitive display. In other embodiments, the display 208 may be located near the input device 206.

The transmitter 210 is used to provide UL communication signals to the base unit 104 and the receiver 212 is used to receive DL communication signals from the base unit 104. In various embodiments, the receiver 212 may be used to receive a handover command involving multiple candidate cells. In some embodiments, the receiver 212 may be used to receive RRCConnectionReconfiguration including a condition for handover. Although only one transmitter 210 and one receiver 212 are illustrated, the remote unit 102 may have any suitable number of transmitters 210 and receivers 212. The transmitter 210 and the receiver 212 may be any suitable type of transmitters and receivers. In one embodiment, the transmitter 210 and the receiver 212 may be part of a transceiver.

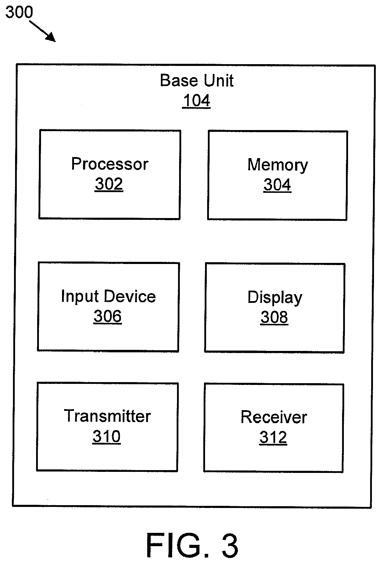

Figure 3 depicts one embodiment of an apparatus 300 that may be used for conditional handovers. The apparatus 300 includes one embodiment of the base unit 104. Furthermore, the base unit 104 may include a processor 302, a memory 304, an input device 306, a display 308, a transmitter 310, and a receiver 312. As may be appreciated, the processor 302, the memory 304, the input device 306, the display 308, the transmitter 310, and the receiver 312 may be substantially similar to the processor 202, the memory 204, the input device 206, the display 208, the transmitter 210, and the receiver 212 of the remote unit 102, respectively.

In various embodiments, the transmitter 310 is used to transmit conditional handover commands to the remote unit 102. Although only one transmitter 310 and one receiver 312 are illustrated, the base unit 104 may have any suitable number of transmitters 310 and receivers 312. The transmitter 310 and the receiver 312 may be any suitable type of transmitters and receivers. In one embodiment, the transmitter 310 and the receiver 312 may be part of a transceiver.

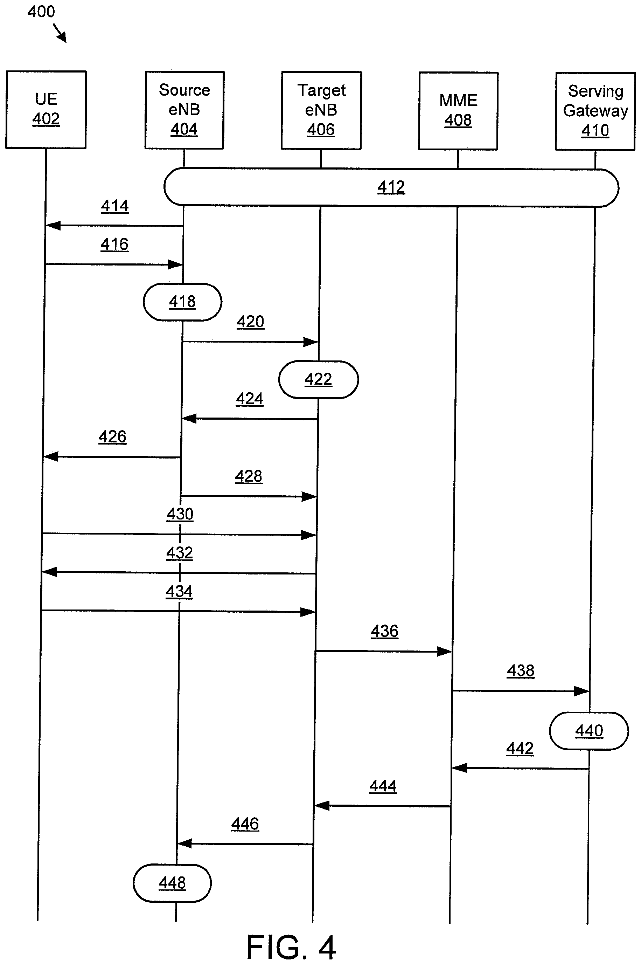

Figure 4 illustrates one embodiment of communications 400 for handovers. Specifically, communications 400 between a UE 402, a source eNB 404, a target eNB 406, a mobility management entity ("MME") 408, and a serving gateway 410 are illustrated.

In certain embodiments, a UE context 412 within the source eNB 404 may contain information regarding roaming and access restrictions which were provided either at connection establishment or at a last TA update. In some embodiments, a first communication 414 from the source eNB 404 to the UE 402 includes the source eNB 404 configuring UE measurement procedures according to roaming and access restriction information and available multiple frequency band information. Measurements provided by the source eNB 404 may facilitate the function controlling the UE's connection mobility.

In various embodiments, a second communication 416 from the UE 402 to the source eNB 404 includes a measurement report triggered and sent to the source eNB 404. In certain embodiments, the source eNB 404 determines 418, based on the measurement report and radio resource management ("RRM") information, to hand off the UE 402. In a third communication 420 from the source eNB 404 to the target eNB 406, the source eNB 404 issues a handover request message to the target eNB 406 passing information to prepare the handover at the target side. Admission control 422 may be performed by the target eNB 406 dependent on received QoS information to increase the likelihood of a successful handover, if the resources can be granted by target eNB 406. The target eNB 406 configures the required resources according to the received QoS information and reserves a cell radio network temporary identifier ("C-RNTI") and optionally a RACH preamble. The configuration to be used in the target cell may either be specified independently (e.g., an establishment) or as a delta compared to the configuration used in the source cell (e.g., a reconfiguration).

In a fourth communication 424 from the target eNB 406 to the source eNB 408, the target eNB 406 prepares a handover with L1/L2 and sends a handover request acknowledge to the source eNB 404. The handover request acknowledge message includes a transparent container to be sent to the UE 402 as an RRC message to perform the handover. The container includes a new C-RNTI, target eNB 406 security algorithm identifiers for the selected security algorithms, and may include a dedicated RACH preamble, and possibly other parameters (e.g., access parameters, SIBs, etc.). The handover request acknowledge message may also include radio network layer/transmission network layer ("RNL/TNL") information for the forwarding tunnels, if necessary. In certain embodiments, as soon as the source eNB 404 receives the handover request acknowledge, or as soon as the transmission of the handover command is initiated in the downlink, data forwarding may be initiated.

In a fifth communication 426 from the source eNB 408 to the UE 402, in response to the target eNB 406 generating an RRC message to perform the handover (e.g., *RRCConnectionReconfiguration* message including the *mobilityControlInformation*), the source eNB 404 transmits the RRC message to the UE 402. The source eNB 404 performs the necessary integrity protection and ciphering of the message. The UE 402 receives the *RRCConnectionReconfiguration* message with necessary parameters (e.g., new C-RNTI, target eNB 406 security algorithm identifiers, and optionally dedicated RACH preamble, target eNB 406 SIBs, etc.) and is commanded by the source eNB 404 to perform the handover. The UE 402 does not need to delay the handover execution for delivering the HARQ/ARQ responses to the source eNB 404.

In a sixth communication 428 from the source eNB 404 to the target eNB 406, the source eNB 404 sends a SN status transfer message to the target eNB 406 to convey an uplink packet data convergence protocol ("PDCP") SN receiver status and a downlink PDCP SN transmitter status of enhanced radio access bearers ("E-RABs") for which PDCP status preservation applies. The uplink PDCP SN receiver status includes at least the PDCP SN of a first missing UL service data unit ("SDU") and may include a bit map of the receive status of the out of sequence UL SDUs that the UE 402 needs to retransmit in the target cell, if there are any such SDUs. The downlink PDCP SN transmitter status indicates the next PDCP SN that the target eNB 406 may assign to new SDUs, not having a PDCP SN yet. The source eNB 404 may omit sending this message if none of the E-RABs of the UE 402 are to be treated with PDCP status preservation.

In a seventh communication 430 from the UE 402 to the target eNB 406, after receiving the *RRCConnectionReconfiguration* message including the *mobilityControlInformation*, the UE 402 performs synchronization to the target eNB 406 and accesses the target cell via RACH, following a contention-free procedure if a dedicated RACH preamble was indicated in the *mobilityControlInformation*, or following a contention-based procedure if no dedicated preamble was indicated. The UE 402 derives target eNB 406 specific keys and configures the selected security algorithms to be used in the target cell.

In an eighth communication 432 from the target eNB 406 to the UE 402, thee target eNB 406 responds with UL allocation and timing advance. In a ninth communication 434 from the UE 402 to the target eNB 406, the UE 402 has successfully accessed the target cell and the UE 402 sends an *RRCConnectionReconfigurationComplete* message (e.g., including C-RNTI) to confirm the handover, along with an uplink buffer status report, whenever possible, to the target eNB 406 to indicate that the handover procedure is completed for the UE 402. The target eNB 406 verifies the C-RNTI sent in the *RRCConnectionReconfigurationComplete* message. The target eNB 406 may then begin sending data to the UE 402.

In a tenth communication 436 from the target eNB 406 to the MME 408, the target eNB 406 sends a path switch request message to the MME 408 to inform the MME 408 that the UE 402 has changed cell. In an eleventh communication 438 from the MME 408 to the serving gateway 410, the MME 408 sends a modify bearer request message to the serving gateway 410. The serving gateway 410 switches 440 the downlink data path to the target side. The serving gateway 410 may send one or more end marker packets on the old path to the source eNB 404 and then may release any U-plane/TNL resources towards the source eNB 404.

In a twelfth communication 442 from the serving gateway 410 to the MME 408, the serving gateway 410 sends a modify bearer response message to the MME 408. In a thirteenth communication 444 from the MME 408 to the target eNB 406, the MME 408 confirms the path switch request message with a path switch request acknowledge message. In a fourteenth communication 446 from the target eNB 406 to the source eNB 404, by sending a UE context release message, the target eNB 406 informs success of the handover to the source eNB 404 and triggers the release of resources by the source eNB 404. The target eNB 406 sends this message after the path switch request acknowledge message is received from the MME 408. Upon reception of the UE context release message, the source eNB 402 may release 448 radio and C-plane related resources associated to the UE 402 context. Any ongoing data forwarding may continue.

In the communication system described in Figure 4, handover failure may occur due to the following three reasons: an RLF (e.g., too late handover) may occur after the UE 402 has stayed for a long period of time in a cell and the UE 402 may attempt to re-establish a radio link connection in a different cell; an RLF (e.g., too early handover) may occur shortly after a successful handover from a source cell to a target cell or a handover failure occurs during the handover procedure and the UE 402 may attempt to re-establish a radio link connection in a source cell; and an RLF (e.g., handover to a wrong cell) may occurs shortly after a successful handover from a source cell to a target cell or a handover failure may occur during a handover procedure and the UE 402 may attempt to re-establish the radio link connection in a cell other than a source cell and a target cell.

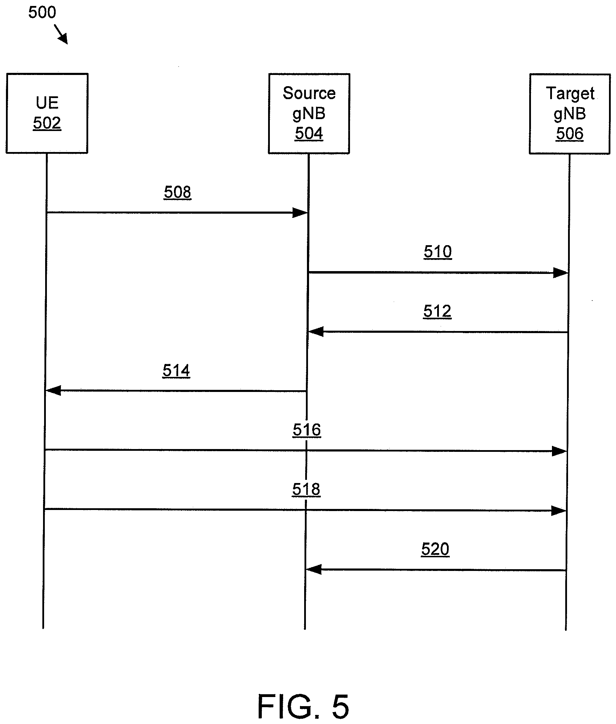

Figure 5 illustrates one embodiment of communications 500 for conditional handovers. By using conditional handovers, too late handover, too early handover, and/or handover to a wrong cell may be avoided. Communications 500 between a UE 502, a gNB 504, and a target gNB 506 are illustrated.

A first communication 508 transmitted from the UE 502 to the source gNB 504 may include the UE 502 reporting measurement results (e.g., reference signal received power ("RSRP"), reference signal received quality ("RSRQ")) based on a trigger condition configured by the source gNB 504. A second communication 510 from the source gNB 504 to the target gNB 506 may include, in response to the source gNB 504 making a decision to perform conditional handover based on the measurement result from the UE 502, the source gNB 504 sending a handover request to the target gNB 506. The handover request may be sent to more than one candidate cell (e.g., target gNBs). A third communication 512 from the target gNB 506 to the source gNB 504 may include the source gNB 504 receiving a handover acknowledge from the target gNB 506 (e.g., one or more candidate cells). A fourth communication 514 from the source gNB 504 to the UE 502 may include the source gNB 504 sending a RRCconnectionreconfiguration message including *mobilityControlInfo* IE and a condition for handover configured by the source gNB 504 to the UE 502. Meanwhile, the source gNB 504 may forward data to the target gNB 506 (e.g., all candidate cells).

A fifth communication 516 from the UE 502 to the target gNB 506 may include, in response to the condition being met and the UE 502 applying the RRCconnectionreconfiguration, accessing the target gNB 506. A sixth communication 518 from the UE 502 to the target gNB 506 may include the UE 502 informing the target gNB 506 that RRC reconfiguration is complete. A seventh communication 520 from the target gNB 506 to the source gNB 504 may include the target gNB 506 informing the source gNB 504 that handover is completed.

In certain embodiments, to avoid handover to a wrong cell and/or redundancy handover, the UE 502 may select a candidate cell (out of multiple available candidate cells) with a best channel quality (e.g., highest RSRP) as the target cell if more than one candidate cell meets the condition.

In some embodiments, the UE 502 may have a trigger condition for handover in which the trigger condition is relative to another cell such as a serving cell and/or one or more candidate cells. For example, the trigger condition for handover may be that the target cell (or beam) becomes offset better than a serving cell (or beam) and/or the target cell (or beam) becomes better than other candidate cells (or beams. As another example, the trigger condition for handover may be that the target cell (or beam) becomes offset better than the serving cell (or beam) in a configured duration and/or the target cell (or beam) becomes better than other candidate cells (or beams) in the configured duration. In some embodiments, the configured duration (e.g., predetermined time period) may be configured by a base unit 104.

In various embodiments, a new behavior for a remote unit 102 is defined for suspended RRCConnectionReconfiguration including mobilityControlInfo and a condition for handover. For example, in one embodiment a base unit 104 informs a remote unit 102 to release a suspended RRCConnectionReconfiguration including conditional handover command by using RRC signaling.

As another example, in certain embodiments, a timer may be included in RRCConnectionReconfiguration including conditional handover. Once the timer expires, the remote unit 102 may release the RRCConnectionReconfiguration including conditional handover.

As a further example, in some embodiments, a remote unit 102 may suspend suspends RRCConnectionReconfiguration including conditional handover until a new RRCConnectionReconfiguration including conditional handover is configured. In such embodiments, in response to RRCConnectionReconfiguration including conditional handover being received by a remote unit 102, the remote unit 102 overwrites the previous suspended RRCConnectionReconfiguration including conditional handover.

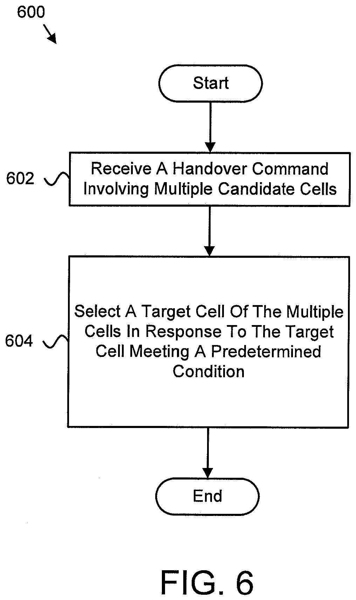

Figure 6 is a schematic flow chart diagram illustrating one embodiment of a method 600 for conditional handovers. In some embodiments, the method 600 is performed by an apparatus, such as the remote unit 102. In certain embodiments, the method 600 may be performed by a processor executing program code, for example, a microcontroller, a microprocessor, a CPU, a GPU, an auxiliary processing unit, a FPGA, or the like.

The method 600 may include receiving 602 a handover command involving multiple candidate cells. The method 600 also includes selecting 604 a target cell of the multiple candidate cells in response to the target cell meeting a predetermined condition.

In one embodiment, selecting the target cell includes selecting the target cell with a best channel quality. In a further embodiment, selecting the target cell includes selecting the target cell with a highest reference signal received power. In certain embodiments, the predetermined condition is indicated in the handover command. In various embodiments, each candidate cell of the multiple candidate cells has a corresponding predetermined condition.

In some embodiments, the handover command is a conditional handover command. In one embodiment, the handover command is part of RRCConnectionReconfiguration and includes mobilityControlInfo. In certain embodiments, the method 600 includes applying the RRCConnectionReconfiguration including the handover command in response to selecting the target cell. In various embodiments, the method 600 includes overwriting a previously suspended handover command in response to receiving the handover command having the predetermined condition.

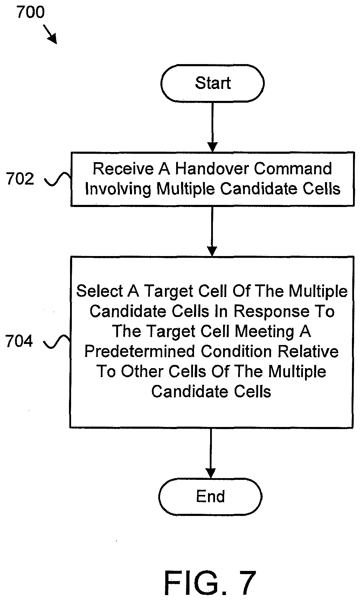

Figure 7 is a schematic flow chart diagram illustrating a method 700 for conditional handovers according to the claimed embodiment. In some embodiments, the method 700 is performed by an apparatus, such as the remote unit 102. In certain embodiments, the method 700 may be performed by a processor executing program code, for example, a microcontroller, a microprocessor, a CPU, a GPU, an auxiliary processing unit, a FPGA, or the like.

The method 700 includes receiving 702 a handover command involving multiple candidate cells. The method 700 also includes selecting 704 a target cell of the multiple candidate cells in response to the target cell meeting a predetermined condition relative to other cells of the multiple candidate cells.

In the claimed embodiment embodiment, the predetermined condition includes an offset that is better than a serving cell, an offset that is better than the other cells of the multiple candidate cells, or some combination thereof. In a further embodiment, the predetermined condition includes an offset that is better than a serving cell in a predetermined time period, an offset that is better than the other cells of the multiple candidate cells in the predetermined time period, or some combination thereof. In certain embodiments, the predetermined time period is configured by a base unit. In the claimed embodiment, the predetermined condition is indicated in the handover command.

In some embodiments, each candidate cell of the multiple candidate cells has a corresponding predetermined condition. In one embodiment, the handover command is a conditional handover command. In certain embodiments, the handover command is part of RRCConnectionReconfiguration and includes mobilityControlInfo. In various embodiments, the method 700 includes applying the RRCConnectionReconfiguration including the handover command in response to selecting the target cell. In the claimed embodiment the method 700 includes overwriting a previously suspended handover command in response to receiving the handover command having the predetermined condition.

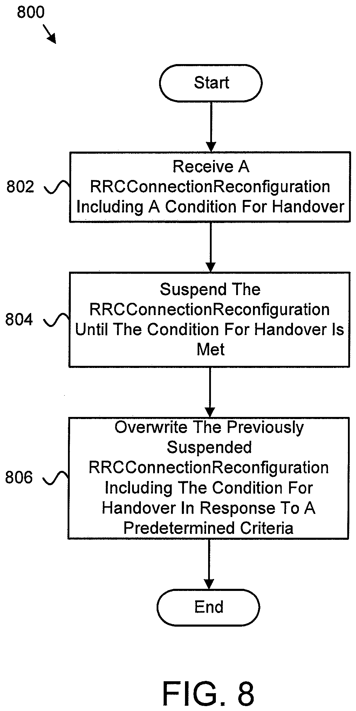

Figure 8 is a schematic flow chart diagram illustrating a further embodiment of a method 800 for conditional handovers. In some embodiments, the method 800 is performed by an apparatus, such as the remote unit 102. In certain embodiments, the method 800 may be performed by a processor executing program code, for example, a microcontroller, a microprocessor, a CPU, a GPU, an auxiliary processing unit, a FPGA, or the like.

The method 800 may include receiving 802 RRCConnectionReconfiguration including a condition for handover. The method 800 also includes suspending 804 the RRCConnectionReconfiguration until the condition for handover is met. The method 800 includes overwriting 806 the previously suspended RRCConnectionReconfiguration including the condition for handover in response to a predetermined criteria.

In one embodiment, the predetermined criteria includes a timer that is part of the RRCConnectionReconfiguration, and in response to the timer elapsing the RRCConnectionReconfiguration is released. In a further embodiment, the timer is started in response to the receiver receiving the RRCConnectionReconfiguration. In certain embodiments, the timer is stopped in response to applying the RRCConnectionReconfiguration. In various embodiments, in response to the timer expiring, the method 800 includes releasing the suspended RRCConnectionReconfiguration including the condition for handover.

In some embodiments, the predetermined criteria includes receiving a new RRCConnectionReconfiguration, and in response to receiving the new RRCConnectionReconfiguration, the new RRCConnectionReconfiguration overwrites the RRCConnectionReconfiguration including the condition for handover. In one embodiment, the method 800 includes applying the RRCConnectionReconfiguration in response to the condition for handover being met.

Embodiments may be practiced in other specific forms. The described embodiments are to be considered in all respects only as illustrative and not restrictive. The scope of the invention is, therefore, indicated by the appended claims rather than by the foregoing description.

## Claims

1. A method performed by a user equipment (102), the method comprising:
receiving (602) a handover command involving a plurality of candidate cells (506);
selecting (604) a target cell of the plurality of candidate cells (506) in response to the target cell meeting a predetermined condition relative to other cells of the plurality of candidate cells;
wherein the predetermined condition is indicated in the handover command and comprises the condition where the target cell becomes offset better than the serving cell and/or where the target cell becomes offset better than other candidate cells;
**characterized by**:
overwriting a previously suspended handover command in response to receiving the handover command having the predetermined condition.

2. The method of claim 1, wherein the predetermined condition indicated in the handover command comprises the condition where the target cell becomes offset better than the serving cell in a configured duration and/or where the target cell becomes offset better than other candidate cells in the configured duration.

3. The method of claim 2, wherein the configured duration is configured by a base unit (504).

4. The method of claim 1, wherein each candidate cell of the plurality of candidate cells has a corresponding predetermined condition.

5. The method of claim 1, wherein the handover message is part of an RRCConnectionReconfiguration message and includes mobilityControlInfo.

6. The method of claim 5, further comprising applying the RRCConnectionReconfiguration message to the target cell in response to selecting the target cell.

7. A User Equipment (102) comprising
a receiver (212) configured to receive a handover command involving a plurality of candidate cells; and
a processor (202) configured to:
select a target cell of the plurality of candidate cells in response to the target cell meeting a predetermined condition relative to other cells of the plurality of candidate cells, wherein the predetermined condition is indicated in the handover command and comprises the condition where the target cell becomes offset better than the serving cell and/or where the target cell becomes offset better than other candidate cells;
**characterized by**:
the processor (202) being configured to overwrite a previously suspended handover command in response to receiving the handover command having the predetermined condition.

8. The user equipment of claim 7, wherein the predetermined condition indicated in the handover command comprises the condition where the target cell becomes offset better than the serving cell in a configured duration and/or where the target cell becomes offset better than other candidate cells in the configured duration.

9. The user equipment of claim 8, wherein the configured duration is configured by a base unit.

10. The user equipment of claim 7, wherein each candidate cell of the plurality of candidate cells has a corresponding predetermined condition.

11. The user equipment of claim 7, wherein the handover command is part of RRCConnectionReconfiguration and includes mobilityControlInfo.

12. The user equipment of claim 11, wherein the processor (202) is configured to apply the RRCConnectionReconfiguration including the handover command in response to selecting the target cell.

## Patentansprüche

1. Verfahren, das durch eine Benutzerausrüstung (102) durchgeführt wird, das Verfahren umfassend:
Empfangen (602) eines Übergabebefehls, der eine Vielzahl von Kandidatenzellen (506) einbezieht;
Auswählen (604) einer Zielzelle aus der Vielzahl von Kandidatenzellen (506) als Reaktion darauf, dass die Zielzelle eine vorherbestimmte Bedingung relativ zu anderen Zellen der Vielzahl von Kandidatenzellen erfüllt;
wobei die vorherbestimmte Bedingung in dem Übergabebefehl angegeben ist und die Bedingung umfasst, dass die Zielzelle einen besseren Offset als die bedienende Zelle aufweist und/oder dass die Zielzelle einen besseren Offset als andere Kandidatenzellen aufweist;
**gekennzeichnet durch:**
Überschreiben eines zuvor ausgesetzten Übergabebefehls als Reaktion auf das Empfangen des Übergabebefehls mit der vorherbestimmten Bedingung.

2. Verfahren nach Anspruch 1, wobei die vorherbestimmte Bedingung, die in dem Übergabebefehl angegeben ist, die Bedingung umfasst, dass die Zielzelle einen besseren Offset als die bedienende Zelle innerhalb einer konfigurierten Dauer aufweist und/oder dass die Zielzelle einen besseren Offset als andere Kandidatenzellen innerhalb der konfigurierten Dauer aufweist.

3. Verfahren nach Anspruch 2, wobei die konfigurierte Dauer durch eine Basiseinheit (504) konfiguriert wird.

4. Verfahren nach Anspruch 1, wobei jede Kandidatenzelle der Vielzahl von Kandidatenzellen eine entsprechende vorherbestimmte Bedingung aufweist.

5. Verfahren nach Anspruch 1, wobei die Übergabenachricht Teil einer RRCConnectionReconfiguration-Nachricht ist und mobilityControllnfo einschließt.

6. Verfahren nach Anspruch 5, ferner umfassend das Anwenden der RRCConnectionReconfiguration-Nachricht auf die Zielzelle als Reaktion auf das Auswählen der Zielzelle.

7. Benutzerausrüstung (102), umfassend:
einen Empfänger (212), der konfiguriert ist, um einen Übergabebefehl zu empfangen, der eine Vielzahl von Kandidatenzellen einbezieht; und
einen Prozessor (202), konfiguriert zum:
Auswählen einer Zielzelle aus der Vielzahl von Kandidatenzellen als Reaktion darauf, dass die Zielzelle eine vorherbestimmte Bedingung relativ zu anderen Zellen der Vielzahl von Kandidatenzellen erfüllt, wobei die vorherbestimmte Bedingung in dem Übergabebefehl angegeben ist und die Bedingung umfasst, dass die Zielzelle einen besseren Offset als die bedienende Zelle aufweist und/oder dass die Zielzelle einen besseren Offset als andere Kandidatenzellen aufweist;
**gekennzeichnet durch:**
wobei der Prozessor (202) konfiguriert ist, um einen zuvor ausgesetzten Übergabebefehl als Reaktion auf das Empfangen des Übergabebefehls, der die vorherbestimmte Bedingung aufweist, zu überschreiben.

8. Benutzerausrüstung nach Anspruch 7, wobei die vorherbestimmte Bedingung, die in dem Übergabebefehl angegeben ist, die Bedingung umfasst, dass die Zielzelle einen besseren Offset als die bedienende Zelle innerhalb einer konfigurierten Dauer aufweist und/oder dass die Zielzelle einen besseren Offset als andere Kandidatenzellen innerhalb der konfigurierten Dauer aufweist.

9. Benutzerausrüstung nach Anspruch 8, wobei die konfigurierte Dauer durch eine Basiseinheit konfiguriert wird.

10. Benutzerausrüstung nach Anspruch 7, wobei jede Kandidatenzelle der Vielzahl von Kandidatenzellen eine entsprechende vorherbestimmte Bedingung aufweist.

11. Benutzerausrüstung nach Anspruch 7, wobei der Übergabebefehl Teil der RRCConnectionReconfiguration ist und mobilityControllnfo einschließt.

12. Benutzerausrüstung nach Anspruch 11, wobei der Prozessor (202) konfiguriert ist, um die RRCConnectionReconfiguration einschließlich des Übergabebefehls als Reaktion auf das Auswählen der Zielzelle anzuwenden.

## Revendications

1. Procédé effectué par un équipement utilisateur (102), le procédé comprenant:
la réception (602) d'une commande de transfert impliquant une pluralité de cellules candidates (506) ;
la sélection (604) d'une cellule cible parmi la pluralité de cellules candidates (506) en réponse au fait que la cellule cible satisfait à une condition prédéterminée par rapport à d'autres cellules de la pluralité de cellules candidates ;
dans lequel la condition prédéterminée est indiquée dans la commande de transfert et comprend la condition selon laquelle la cellule cible est mieux décalée que la cellule de desserte et/ou selon laquelle la cellule cible est mieux décalée que d'autres cellules candidates ;
**caractérisé par** :
l'écrasement d'une commande de transfert précédemment suspendue en réponse à la réception de la commande de transfert ayant la condition prédéterminée.

2. Procédé selon la revendication 1, dans lequel la condition prédéterminée indiquée dans la commande de transfert comprend la condition selon laquelle la cellule cible est mieux décalée que la cellule de desserte dans une durée configurée et/ou selon laquelle la cellule cible est mieux décalée que d'autres cellules candidates dans la durée configurée.

3. Procédé selon la revendication 2, dans lequel la durée configurée est configurée par une unité de base (504).

4. Procédé selon la revendication 1, dans lequel chaque cellule candidate de la pluralité de cellules candidates a une condition prédéterminée correspondante.

5. Procédé selon la revendication 1, dans lequel le message de transfert fait partie d'un message RRCConnectionReconfiguration et comporte l'élément d'information mobilityControllnfo.

6. Procédé selon la revendication 5, comprenant en outre l'application du message RRCConnectionReconfiguration à la cellule cible en réponse à la sélection de la cellule cible.

7. Équipement utilisateur (102), comprenant :
un récepteur (212) configuré pour recevoir une commande de transfert impliquant une pluralité de cellules candidates ; et
un processeur (202) configuré pour :
sélectionner une cellule cible parmi la pluralité de cellules candidates en réponse au fait que la cellule cible satisfait à une condition prédéterminée par rapport à d'autres cellules de la pluralité de cellules candidates, dans lequel la condition prédéterminée est indiquée dans la commande de transfert et comprend la condition selon laquelle la cellule cible est mieux décalée que la cellule de desserte et/ou la condition selon laquelle la cellule cible est mieux décalée que d'autres cellules candidates ;
**caractérisé par** :
le processeur (202) est configuré pour écraser une commande de transfert précédemment suspendue en réponse à la réception de la commande de transfert ayant la condition prédéterminée.

8. Équipement utilisateur selon la revendication 7, dans lequel la condition prédéterminée indiquée dans la commande de transfert comprend la condition selon laquelle la cellule cible est mieux décalée que la cellule de desserte dans une durée configurée et/ou selon laquelle la cellule cible est mieux décalée que d'autres cellules candidates dans la durée configurée.

9. Équipement utilisateur selon la revendication 8, dans lequel la durée configurée est configurée par une unité de base.

10. Équipement utilisateur selon la revendication 7, dans lequel chaque cellule candidate de la pluralité de cellules candidates a une condition prédéterminée correspondante.

11. Équipement utilisateur selon la revendication 7, dans lequel la commande de transfert fait partie d'un message RRCConnectionReconfiguration et comporte l'élément d'information mobilityControllnfo.

12. Équipement utilisateur selon la revendication 11, dans lequel le processeur (202) est configuré pour appliquer le message RRCConnectionReconfiguration comportant la commande de transfert en réponse à la sélection de la cellule cible.
